# EUROPEAN PATENT APPLICATION

(11) **EP 3 644 262 A1**
(43) Date of publication of application: **29.04.2020**
(21) Application number: 18880553.5
(22) Date of filing: 25.10.2018
(51) Int. Cl.: G06Q 30/00

(54) **COMMODITY ANTI-COUNTERFEITING VERIFICATION METHOD, APPARATUS, AND DEVICE**

(30) Priority: 21.11.2017 CN 201711168248; 09.01.2018 CN 201810018034
(71) Applicant: Alibaba Group Holding Limited, Grand Cayman (KY)
(72) Inventor: DU, Huabing, Zhejiang 311121 (CN)
(74) Representative: Goddar, Heinz J.
(86) International application number: PCT/CN2018/111837
(87) International publication number: WO 2019/100900

(57) **Abstract**

Implementations of the present specification disclose a product anti-counterfeiting verification method, apparatus, and device. In the implementations of the present specification, a user needs to obtain permission information to use at least some of functions of a product. In addition, the user needs to perform verification on the product, and can obtain the permission information only after the verification succeeds.

## Description

### CROSS-REFERENCE TO RELATED APPLICATIONS

The present application claims priority to Patent Application No. 201711168248.9, filed with the China National Intellectual Property Administration on November 21, 2017 and entitled "PRODUCT ANTI-COUNTERFEITING VERIFICATION METHOD, APPARATUS, AND DEVICE", and Patent Application No. 201810018034.1, filed with the China National Intellectual Property Administration on January 9, 2018 and entitled "PRODUCT ANTI-COUNTERFEITING VERIFICATION METHOD, APPARATUS, AND DEVICE", which are incorporated here by reference in their entireties.

### TECHNICAL FIELD

The present specification relates to the field of information technologies, and in particular, to a product anti-counterfeiting verification method, apparatus, and device.

### BACKGROUND

To prevent wrongdoers from making counterfeits, manufacturers usually print verification codes on products or packages of products. After purchasing the products, consumers can verify, by using the verification codes, whether the products are manufactured by the manufacturers.

For example, a certain brand wine factory can print a verification code on a bottle of white wine. After purchasing the white wine, a consumer can send the verification code to a server of the wine factory through a network. The server of the wine factory determines whether the white wine is authentic based on the verification code, and returns a verification result.

Based on the existing technology, a product anti-counterfeiting verification method is needed for anti-counterfeiting purposes i.e., to prevent a wrongdoer from reusing a verification code to make a counterfeit.

### SUMMARY

Implementations of the present specification provide a product anti-counterfeiting verification method, apparatus, and device, to alleviate a problem, in an existing product anti-counterfeiting verification method, that a wrongdoer cannot be prevented from reusing a verification code to make a counterfeit.

To alleviate the previous technical problem, the implementations of the present specification are implemented as follows:

An implementation of the present specification provides a product anti-counterfeiting verification method, including: receiving a verification code corresponding to a product sent by a user; performing verification on the product based on the verification code; and returning permission information to the user if the verification succeeds, so that the user uses at least some of functions of the product by using the permission information.

An implementation of the present specification provides a product anti-counterfeiting verification apparatus, including: a receiving module, configured to receive a verification code corresponding to a product sent by a user; a verification module, configured to perform verification on the product based on the verification code; and a first processing module, configured to refuse to return permission information to the user if the verification performed by the verification module on the product fails so that the user uses at least some of functions of the product by using the permission information.

An implementation of the present specification provides a product anti-counterfeiting verification device, including one or more processors and one or more memories, where the memory stores a program, and the program is executed by the one or more processors to perform the following steps: receiving a verification code corresponding to a product sent by a user; performing verification on the product based on the verification code; and returning permission information to the user if the verification succeeds, so that the user uses at least some of functions of the product by using the permission information.

It can be seen from the technical solutions provided in the implementations of the present specification that in the implementations of the present specification, the user needs to obtain the permission information to use the at least some of the functions of the product. In addition, the user needs to perform verification on the product, and can obtain the permission information only after the verification succeeds. As such, the user can be encouraged to perform verification on the product by using the verification code corresponding to the product, and therefore it is difficult for a wrongdoer to reuse an unused verification code to make a counterfeit.

### BRIEF DESCRIPTION OF DRAWINGS

To describe the technical solutions in the implementations of the present specification or in the existing technology more clearly, the following briefly describes the accompanying drawings needed for describing the implementations or the existing technology. Clearly, the accompanying drawings in the following description are merely some of the implementations described in the present specification. A person of ordinary skill in the art can further derive other drawings from these accompanying drawings without creative efforts.
FIG. 1 is a flowchart illustrating a product anti-counterfeiting verification method, according to an implementation of the present specification;
FIG. 2a is a schematic diagram illustrating a wine bottle with a combination lock on a bottle cap, according to an implementation of the present specification;
FIG. 2b is a schematic diagram illustrating a to-be-activated mobile phone, according to an implementation of the present specification;
FIG. 3 is a schematic diagram illustrating a product anti-counterfeiting verification apparatus, according to an implementation of the present specification; and
FIG. 4 is a schematic diagram illustrating a product anti-counterfeiting verification device, according to an implementation of the present specification.

### DESCRIPTION OF IMPLEMENTATIONS

There are two main mechanisms in an existing verification method:

In one mechanism, a verification code is valid only when the verification code is used for the first time, and the verification code expires after verification has been performed by using the verification code. This means that after a consumer purchases an authentic product, a verification code is invalid provided that the consumer has performed verification by using the verification code, and if another person performs verification by using the same verification code, a verification failure result is obtained.

In another mechanism, a verification code can be used for several times. However, each time a consumer performs verification by using the verification code, if the verification succeeds, the consumer learns a total number of times the verification code has been used. If the verification code is not used for the first time, it indicates that the consumer may purchase a counterfeit.

It can be seen that it is unwise for a wrongdoer to reuse a used verification code to make a counterfeit. This is because once a user who purchases a counterfeit performs verification by using a verification code corresponding to the counterfeit, the user receives a verification failure feedback or learns that the verification code has been used, and therefore has doubts.

However, the premise that the existing verification method can identify a counterfeit is that a user will consciously performs verification by using a verification code corresponding to a product after purchasing the product. In real life, many consumers do not perform verification by using verification codes on packages of products after purchasing the products. Therefore, a wrongdoer usually can reuse many unused verification codes to make counterfeits. If performing verification by using the verification codes, consumers who purchase these counterfeits will receive a verification success feedback (and/or learn that the verification codes are used for the first time), and therefore are misled.

In one or more implementations of the present specification, each product is set in advance, so that only by obtaining permission information, a user can use at least some of functions of the product by using the permission information. In addition, the user can obtain the permission information only after verification is triggered by using a verification code and the verification succeeds. As such, the user can be encouraged to perform product anti-counterfeiting verification by using the verification code, and therefore it is difficult for a wrongdoer to reuse an unused verification code.

To make a person skilled in the art better understand the technical solutions in the present specification, the following clearly and comprehensively describes the technical solutions in the implementations of the present specification with reference to the accompanying drawings in the one or more implementations of the present specification. Clearly, the described implementations are merely some but not all of the implementations of the present specification. All other implementations obtained by a person of ordinary skill in the art based on the implementations of the present specification without creative efforts shall fall within the protection scope of the present specification.

The technical solutions provided in the implementations of the present specification are described below in detail with reference to the accompanying drawings.

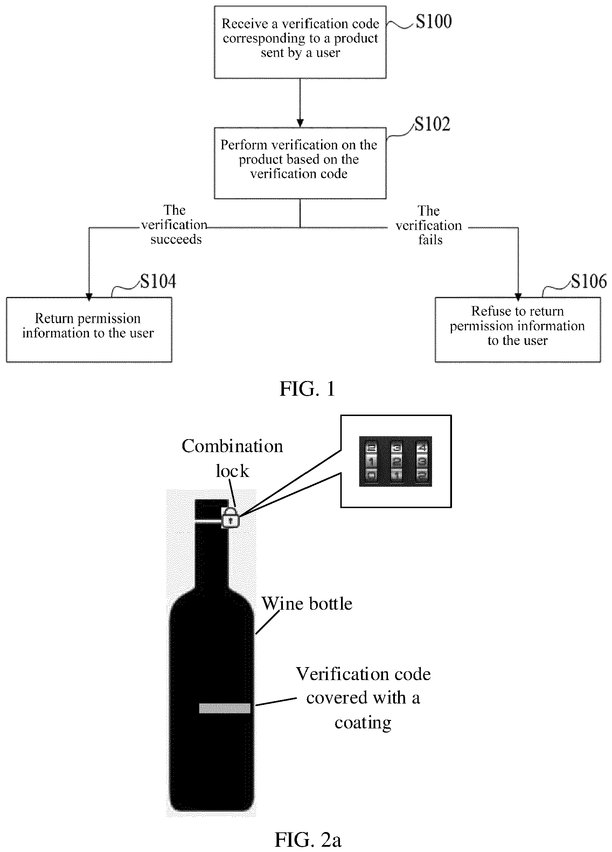

FIG. 1 is a flowchart illustrating a product anti-counterfeiting verification method, according to an implementation of the present specification. The method includes the following steps.

S100. Receive a verification code corresponding to a product sent by a user.

The method can be performed by a device (which is referred to as an anti-counterfeiting verification device in the present specification) of a body that bears the responsibility of guaranteeing authenticity of the product, for example, a server of a manufacturer of the product, a server of a trade association that the product belongs to, or a third-party anti-counterfeiting verification device.

In the present implementation of the present specification, the verification code corresponding to the product can be located on the product, and/or located on a package of the product, and/or displayed after the product is powered on. In short, the user can obtain the verification code corresponding to the product after purchasing the product.

In the present implementation of the present specification, the manufacturer or a seller of the product can set the product or the package of the product, so that the user cannot use at least some of functions of the product before verification on the product succeeds. The at least some of the functions are referred to as restricted functions in the present specification. If wanting to use these restricted functions of the product, the user needs to obtain permission information, and uses these restricted functions of the product by using the permission information. The restricted functions usually are functions that can reflect main use value of the product. For example, a bottle of wine is mainly used for drinking, and therefore a combination lock can be set on a bottle cap of a wine bottle to prevent the user from opening the bottle cap.

In the present specification, no specific limitation is imposed on how to set the product or the package of the product to ensure that the user cannot use the at least some of the functions of the product before the verification on the product succeeds, as long as the following rules are followed:
1. An obstacle is caused to normal use of the product after the product or the package is set.
2. The obstacle can be alleviated after the user obtains the permission information.

Therefore, if the user wants to use the restricted functions of the product after purchasing the product, the user needs to send the verification code corresponding to the product to the anti-counterfeiting device for verification. The user can send the verification code by sending an SMS message by using a mobile phone or by accessing a network by using an intelligent device.

S102. Perform verification on the product based on the verification code, and perform step S104 if the verification succeeds, or perform step S106 if the verification fails.

After receiving the verification code, the anti-counterfeiting device can perform verification on the product based on the verification code.

Specifically, the anti-counterfeiting device can perform the following verification procedures: determining whether verification is performed for the first time by using the verification code; and in response to a positive determination, determining, based on the verification code, whether the verification code is in pre-stored verification codes; and in response to a positive determination, determining that the verification succeeds; or if the verification code is not in the pre-stored verification codes, determining that the verification fails; or if the verification is not performed for the first time, determining that the verification fails.

Alternatively, the anti-counterfeiting device can perform the following verification procedures: determining, based on the verification code, whether the verification code is in pre-stored verification codes; and in response to a positive determination, determining that the verification succeeds, and returning the number of times verification has been performed by using the verification code to the user; or if the verification code is not in pre-stored anti-counterfeiting codes, determining that the verification fails.

S104. Return the permission information to the user.

As described above, the permission information is actually information needed for the user to use the restricted functions of the product. A form of the corresponding permission information varies with a method for restricting the at least some of the functions of the product.

For example, when the verification code is located on the package of the product, there is a combination lock on the package. The combination lock is used to keep the package in a closed state, and the permission information is a password used to open the combination lock. As shown in FIG. 2a, the verification code is located on a wine bottle, and there is a combination lock on a bottle cap of the wine bottle. The user can take wine out of the wine bottle only by obtaining a password used to open the combination lock.

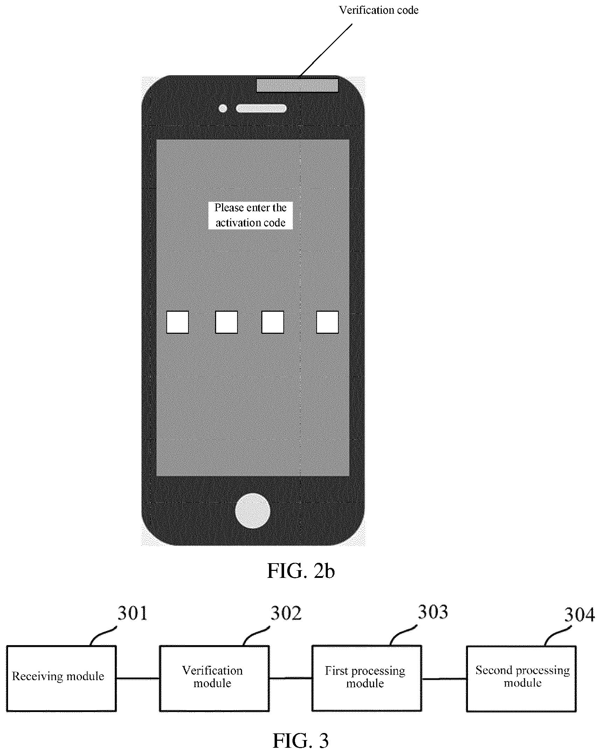

For another example, when the product is an electronic product, the permission information is an activation code. The activation code is used to activate the restricted functions of the product after the user enters the activation code on the product. As shown in FIG. 2b, the product is a mobile phone. The user can obtain the verification code from body of the mobile phone, perform verification by using the verification code, and obtain the activation code. After the mobile phone is turned on, the user can enter the phone system only after the activation code is input.

For another example, when the product is an electronic product, the at least some of the functions of the product can be frozen in advance at a software level. When the user performs verification by using the verification code, and the verification succeeds, the anti-counterfeiting device can determine an identifier corresponding to the product based on the verification code; and then communicate with the product based on the identifier, and send the permission information to the product. The permission information is used to activate the at least some of the functions of the product.

Alternatively, the product can have at least two conditions, and at least one condition of the product is initially unavailable. In this case, the permission information is used to allow the user to use the condition of the product that is initially unavailable. For example, the product can be a leather bag. A first condition of the leather bag is a condition when a zipper is closed, and a second condition of the leather bag is a condition when the zipper is opened. Initially, the zipper is closed, and two rows of teeth of the zipper of the leather bag can be locked together with a combination lock, so that the user cannot open the leather bag, in other words, the second condition of the leather bag is unavailable. The permission information is a password used to open the combination lock, so that the user can open the zipper of the leather bag, and use the condition that is initially unavailable.

In the present implementation of the present specification, each product can correspond to the same permission information or different permission information. When each product corresponds to different permission information, the anti-counterfeiting device can pre-store the permission information, and establish a one-to-one mapping relationship between verification codes and the permission information. As such, one product corresponds to one unique verification code and one piece of unique permission information.

S 106. Refuse to return the permission information to the user.

If the verification fails, it means that the verification code used by the user is incorrect, to be specific, the verification codes pre-stored by the anti-counterfeiting device do not include the verification code sent by the user, and the anti-counterfeiting device does not need to return the permission information to the user.

In the product anti-counterfeiting verification method shown in FIG. 1, a user can be encouraged to perform verification on a product by using a verification code corresponding to the product, and therefore it is difficult for a wrongdoer to reuse an unused verification code.

In addition, in the present implementation of the present specification, the verification code can be specifically a first verification code. The first verification code corresponding to the product can be used as an identifier of the product in manufacturing and circulation processes. Products of the same batch (or the same brand, the same type, etc.) can correspond to the same first verification code.

The user can perform verification on the product by using the first verification code corresponding to the product after purchasing the product. Specifically, the user can send the first verification code corresponding to the product to the anti-counterfeiting verification device, and the anti-counterfeiting verification device can return traceability information corresponding to the first verification code to the user based on the first verification code. The traceability information corresponding to the first verification code is actually manufacturing time information, manufacturing place information, logistics information, etc. of the product identified by the first verification code in manufacturing and circulation processes. For example, the traceability information can be a manufacturing time, a manufacturing place, a manufacturer, a delivery time, a sale time, and a sale place of the product.

The user can determine, based on the traceability information sent by the anti-counterfeiting verification device, whether the product comes from a reliable source. If determining that the product comes from a reliable source, the user sends a verification result (the verification succeeds or fails) to the anti-counterfeiting verification device.

In addition, the verification code can include a first verification code and a second verification code. Each product corresponds to a different second verification code. After purchasing the product, the user needs to perform verification on the product by using the first verification code and the second verification code, and can obtain the permission information returned by the anti-counterfeiting verification device only after the verification succeeds.

Specifically, the anti-counterfeiting verification device can perform the following steps: returning traceability information corresponding to the first verification code to the user based on the first verification code; receiving a feedback result returned by the user based on the traceability information; determining, based on the second verification code and pre-stored target verification codes, whether the second verification code is in the target verification codes; and determining that the verification succeeds if the feedback result returned by the user is a specified result (for example, determining that the product comes from a reliable source) and the second verification code is in the target verification codes; or determining that the verification fails if the feedback result returned by the user is not a specified result or the second verification code is not in the target verification codes.

Alternatively, the anti-counterfeiting verification device can perform the following steps: returning traceability information corresponding to the first verification code to the user based on the first verification code; determining, based on the second verification code sent after verification performed by the user on the traceability information succeeds and pre-stored target verification codes, whether the second verification code is in the target verification codes; and if the second verification code is in the target verification codes, determining that the verification succeeds, updating the recorded number of times verification has been performed on the second verification code, and returning the updated number of verification times to the user; or determining that the verification fails if the second verification code is not in the target verification codes.

Alternatively, the anti-counterfeiting verification device can perform the following steps: returning traceability information corresponding to the first verification code to the user based on the first verification code; determining, based on the second verification code sent after verification performed by the user on the traceability information succeeds and pre-stored target verification codes, whether the second verification code is in the target verification codes; and determining whether verification has been performed on the second verification code if the second verification code is in the target verification codes; and determining that the verification fails if verification has been performed on the second verification code; or determining that the verification succeeds if no verification has been performed on the second verification code; or determining that the verification fails if the second verification code is not in the target verification codes.

In addition, it is worthwhile to note that in practice, to ensure authenticity and reliability of traceability information of a product, in each of several processes for manufacturing and circulation of the product, a person or a device corresponding to this process can send, based on blockchain technologies, traceability information of the product that is generated in this process to each blockchain node (the blockchain node can be a corporation in the same industry and/or a device of a logistics corporation) for consensus verification, and traceability information on which the consensus verification succeeds and that corresponds to the product is stored in a blockchain.

As such, when needing to return the traceability information corresponding to the first verification code to the user, the anti-counterfeiting verification device can obtain the traceability information corresponding to the first verification code from the traceability information stored in the blockchain, and then return the obtained traceability information to the user.

It is worthwhile to further note that the first verification code can be a plain code, and the second verification code can be a secret code. The secret code refers to a verification code covered with a coating (which is usually a clear coating), and the user can view the second verification code only after the coating is removed. The plain code refers to a verification code that is not covered with a coating (or is covered with a clear coating), and the user can directly view the first verification code.

Based on the product anti-counterfeiting verification method shown in FIG. 1, an implementation of the present specification further provides a product anti-counterfeiting verification apparatus, as shown in FIG. 3. The apparatus includes: a receiving module 301, configured to receive a verification code corresponding to a product sent by a user; a verification module 302, configured to perform verification on the product based on the verification code; and a first processing module 303, configured to return permission information to the user if the verification performed by the verification module 302 on the product succeeds, so that the user uses at least some of functions of the product by using the permission information.

The verification code specifically includes a first verification code; and the verification module 302 is configured to return traceability information corresponding to the first verification code to the user based on the first verification code; and receive a verification result returned by the user based on the traceability information.

The verification code specifically includes a first verification code and a second verification code; and the verification module 302 is configured to return traceability information corresponding to the first verification code to the user based on the first verification code; determine, based on the second verification code sent after verification performed by the user on the traceability information succeeds and pre-stored target verification codes, whether the second verification code is in the target verification codes; and if the second verification code is in the target verification codes, determine that the verification succeeds, update the recorded number of times verification has been performed on the second verification code, and return the updated number of verification times to the user; or determine that the verification fails if the second verification code is not in the target verification codes.

The verification module 302 is configured to obtain the traceability information corresponding to the first verification code from traceability information stored in a blockchain; and return the obtained traceability information to the user.

The first verification code is a plain code, and the second verification code is a secret code.

The verification code is located on the product, and/or located on a package of the product, and/or displayed after the product is powered on.

When the verification code is located on the package of the product, there is a combination lock on the package. The combination lock is used to keep the package in a closed state, and the permission information is a password used to open the combination lock.

When the product is an electronic product, the permission information is an activation code. The activation code is used to activate the at least some of the functions of the product after the user enters the activation code on the product.

When the product is an electronic product, the returning module 303 is configured to determine an identifier corresponding to the product based on the verification code; and communicate with the product based on the identifier, and send the permission information to the product. The permission information is used to activate the at least some of the functions of the product.

The apparatus further includes a second processing module 304, configured to refuse to return the permission information to the user if the verification performed by the verification module on the product fails.

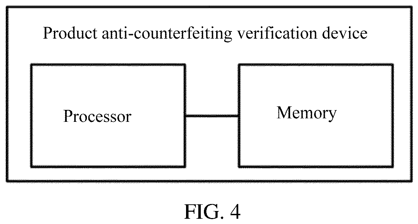

Based on the product anti-counterfeiting verification method shown in FIG. 1, an implementation of the present specification further provides a product anti-counterfeiting verification device, as shown in FIG. 4. The device includes one or more processors and one or more memories, the memory stores a program, and the program is executed by the one or more processors to perform the following steps: receiving a verification code corresponding to a product sent by a user; performing verification on the product based on the verification code; and returning permission information to the user if the verification succeeds, so that the user uses at least some of functions of the product by using the permission information; or refusing to return permission information to the user if the verification fails.

The implementations of the present specification are described in a progressive way. For same or similar parts of the implementations, references can be made to the implementations. Each implementation focuses on a difference from other implementations. Particularly, the device shown in FIG. 4 is basically similar to the method implementation, and therefore is described briefly. For related parts, references can be made to related description in the method implementation.

In the 1990s, whether a technical improvement is a hardware improvement (for example, an improvement to circuit structures, such as a diode, a transistor, or a switch) or a software improvement (an improvement to a method procedure) can be clearly distinguished. However, as technologies develop, current improvements to many method procedures can be considered as direct improvements to hardware circuit structures. A designer usually programs an improved method procedure into a hardware circuit, to obtain a corresponding hardware circuit structure. Therefore, a method procedure can be improved by using a hardware entity module. For example, a programmable logic device (PLD) (for example, a field programmable gate array

(FPGA)) is such an integrated circuit, and a logical function of the PLD is determined by a user through device programming. The designer performs programming to "integrate" a digital system to a PLD without requesting a chip manufacturer to design and produce an application-specific integrated circuit chip. In addition, the programming is mostly implemented by modifying "logic compiler" software instead of manually making an integrated circuit chip. This is similar to a software compiler used for program development and compiling. However, original code before compiling is also written in a specific programming language, which is referred to as a hardware description language (HDL). There are many HDLs, such as an Advanced Boolean Expression Language (ABEL), an Altera Hardware Description Language (AHDL), Confluence, a Cornell University Programming Language (CUPL), HDCal, a Java Hardware Description Language (JHDL), Lava, Lola, MyHDL, PALASM, and a Ruby Hardware Description Language (RHDL). Currently, a Very-High-Speed Integrated Circuit Hardware Description Language (VHDL) and Verilog are most commonly used. A person skilled in the art should also understand that a hardware circuit that implements a logical method procedure can be readily obtained once the method procedure is logically programmed by using the several described hardware description languages and is programmed into an integrated circuit.

A controller can be implemented by using any appropriate method. For example, the controller can be a microprocessor or a processor, a computer-readable medium that stores computer readable program code (such as software or firmware) that can be executed by a microprocessor or a processor, a logic gate, a switch, an application-specific integrated circuit (ASIC), a programmable logic controller, or a built-in microprocessor. Examples of the controller include but are not limited to the following microprocessors: ARC 625D, Atmel AT91SAM, Microchip PIC18F26K20, and Silicone Labs C8051F320. The memory controller can also be implemented as a part of control logic of a memory. A person skilled in the art also knows that, in addition to implementing the controller by using the computer readable program code, logic programming can be performed on method steps to allow the controller to implement the same function in forms of a logic gate, a switch, an application-specific integrated circuit, a programmable logic controller, and a built-in microcontroller. Therefore, the controller can be considered as a hardware component, and an apparatus configured to implement various functions in the controller can also be considered as a structure in the hardware component. Or the apparatus configured to implement various functions can even be considered as both a software module implementing the method and a structure in the hardware component.

The system, apparatus, module, or unit illustrated in the previous implementations can be implemented by using a computer chip or an entity, or can be implemented by using a product having a certain function. A typical implementation device is a computer. The computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the apparatus above is described by dividing functions into various units. Certainly, when the present specification is implemented, function of units can be implemented in one or more pieces of software and/or hardware.

A person skilled in the art should understand that an implementation of the present disclosure can be provided as a method, a system, or a computer program product. Therefore, the present disclosure can use a form of hardware only implementations, software only implementations, or implementations with a combination of software and hardware. In addition, the present disclosure can use a form of a computer program product that is implemented on one or more computer-usable storage media (including but not limited to a disk memory, a CD-ROM, an optical memory, etc.) that include computer-usable program code.

The present disclosure is described with reference to the flowcharts and/or block diagrams of the method, the device (system), and the computer program product based on the implementations of the present disclosure. It should be understood that computer program instructions can be used to implement each process and/or each block in the flowcharts and/or the block diagrams and a combination of processes and/or blocks in the flowcharts and/or the block diagrams. These computer program instructions can be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions can be stored in a computer readable memory that can instruct a computer or another programmable data processing device to work in a specific way, so that the instructions stored in the computer readable memory generate an artifact that includes an instruction apparatus. The instruction apparatus implements a specific function in one or more processes in the flowcharts and/or in one or more blocks in the block diagrams.

These computer program instructions can be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, a computing device includes one or more processors (CPUs), input/output interfaces, network interfaces, and memories.

The memory can include a non-persistent memory, a random access memory (RAM), a nonvolatile memory, and/or another form that are in a computer readable medium, for example, a read-only memory (ROM) or a flash memory (flash RAM). The memory is an example of the computer readable medium.

The computer readable medium includes persistent, non-persistent, removable, and irremovable media that can store information by using any method or technology. The information can be a computer readable instruction, a data structure, a program module, or other data. Examples of a computer storage medium include but are not limited to a parameter random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or other optical storage, a cassette magnetic tape, magnetic tape/magnetic disk storage, another magnetic storage device, or any other non-transmission medium. The computer storage medium can be used to store information accessible by the computing device. Based on the definition in the present specification, the computer readable medium does not include transitory computer readable media (transitory media) such as a modulated data signal and carrier.

It is worthwhile to further note that the term "include", "comprise", or their any other variant is intended to cover a nonexclusive inclusion, so that a process, a method, a product, or a device that includes a series of elements not only includes these elements, but also includes other elements which are not expressly listed, or further includes elements inherent to such process, method, product, or device. An element described by "includes a ..." further includes, without more constraints, another same or identical element in the process, method, product, or device that includes the element.

A person skilled in the art should understand that an implementation of the present specification can be provided as a method, a system, or a computer program product. Therefore, the present specification can use a form of hardware only implementations, software only implementations, or implementations with a combination of software and hardware. In addition, the present specification can use a form of a computer program product that is implemented on one or more computer-usable storage media (including but not limited to a disk memory, a CD-ROM, an optical memory, etc.) that include computer-usable program code.

The present specification can be described in the general context of computer-executable instructions executed by a computer, for example, a program module. The program module usually includes a routine, a program, an object, a component, a data structure, etc. for executing a specific task or implementing a specific abstract data type. The present specification can be practiced in distributed computing environments. In the distributed computing environments, tasks are executed by remote processing devices that are connected through a communications network. In the distributed computing environment, the program module can be located in both local and remote computer storage media including storage devices.

The previous descriptions are merely implementations of the present specification, and are not intended to limit the present specification. For a person skilled in the art, the present specification can have various modifications and changes. Any modifications, equivalent replacements, and improvements made within the spirit and the principle of the present specification shall fall within the scope of the claims in the present specification.

## Claims

1. A product anti-counterfeiting verification method, comprising:
receiving a verification code corresponding to a product sent by a user;
performing verification on the product based on the verification code; and
returning permission information to the user if the verification succeeds, so that the user uses at least some of functions of the product by using the permission information.

2. The method according to claim 1, wherein the verification code specifically comprises a first verification code; and
the performing verification on the product based on the verification code specifically comprises:
returning traceability information corresponding to the first verification code to the user based on the first verification code; and
receiving a verification result returned by the user based on the traceability information.

3. The method according to claim 1, wherein the verification code specifically comprises a first verification code and a second verification code; and
the performing verification on the product based on the verification code specifically comprises:
returning traceability information corresponding to the first verification code to the user based on the first verification code;
determining, based on the second verification code sent after verification performed by the user on the traceability information succeeds and pre-stored target verification codes, whether the second verification code is in the target verification codes; and
if the second verification code is in the target verification codes, determining that the verification succeeds, updating the recorded number of times verification has been performed on the second verification code, and returning the updated number of verification times to the user; or
determining that the verification fails if the second verification code is not in the target verification codes.

4. The method according to claim 2 or 3, wherein the returning traceability information corresponding to the first verification code to the user specifically comprises:
obtaining the traceability information corresponding to the first verification code from traceability information stored in a blockchain; and
returning the obtained traceability information to the user.

5. The method according to claim 3, wherein the first verification code is a plain code, and the second verification code is a secret code.

6. The method according to claim 1, wherein
the verification code is located on the product; and/or
the verification code is located on a package of the product; and/or
the verification code is displayed after the product is powered on.

7. The method according to claim 6, wherein when the verification code is located on the package of the product, there is a combination lock on the package, wherein the combination lock is used to keep the package in a closed state, and the permission information is a password used to open the combination lock.

8. The method according to claim 6, wherein when the product is an electronic product, the permission information is an activation code, wherein the activation code is used to activate the at least some of the functions of the product after the user enters the activation code on the product.

9. The method according to claim 6, wherein when the product is an electronic product, the returning permission information to the user comprises:
determining an identifier corresponding to the product based on the verification code; and
communicating with the product based on the identifier, and sending the permission information to the product, wherein the permission information is used to activate the at least some of the functions of the product.

10. The method according to claim 1, wherein the method further comprises:
refusing to return the permission information to the user if the verification fails.

11. A product anti-counterfeiting verification apparatus, comprising:
a receiving module, configured to receive a verification code corresponding to a product sent by a user;
a verification module, configured to perform verification on the product based on the verification code; and
a first processing module, configured to return permission information to the user if the verification performed by the verification module on the product succeeds, so that the user uses at least some of functions of the product by using the permission information

12. The apparatus according to claim 11, wherein the verification code specifically comprises a first verification code; and
the verification module is configured to return traceability information corresponding to the first verification code to the user based on the first verification code; and receive a verification result returned by the user based on the traceability information.

13. The apparatus according to claim 11, wherein the verification code specifically comprises a first verification code and a second verification code; and
the verification module is configured to return traceability information corresponding to the first verification code to the user based on the first verification code; determine, based on the second verification code sent after verification performed by the user on the traceability information succeeds and pre-stored target verification codes, whether the second verification code is in the target verification codes; and if the second verification code is in the target verification codes, determine that the verification succeeds, update the recorded number of times verification has been performed on the second verification code, and return the updated number of verification times to the user; or determine that the verification fails if the second verification code is not in the target verification codes.

14. The apparatus according to claim 12 or 13, wherein the verification module is configured to obtain the traceability information corresponding to the first verification code from traceability information stored in a blockchain; and return the obtained traceability information to the user.

15. The apparatus according to claim 13, wherein the first verification code is a plain code, and the second verification code is a secret code.

16. The apparatus according to claim 11, wherein
the verification code is located on the product; and/or
the verification code is located on a package of the product; and/or
the verification code is displayed after the product is powered on.

17. The apparatus according to claim 16, wherein when the verification code is located on the package of the product, there is a combination lock on the package, wherein the combination lock is used to keep the package in a closed state, and the permission information is a password used to open the combination lock.

18. The apparatus according to claim 16, wherein when the product is an electronic product, the permission information is an activation code, wherein the activation code is used to activate the at least some of the functions of the product after the user enters the activation code on the product.

19. The apparatus according to claim 16, wherein when the product is an electronic product, the returning module is configured to determine an identifier corresponding to the product based on the verification code; and communicate with the product based on the identifier, and send the permission information to the product, wherein the permission information is used to activate the at least some of the functions of the product.

20. The apparatus according to claim 11, wherein the apparatus further comprises a second processing module, configured to refuse to return the permission information to the user if the verification performed by the verification module on the product fails.

21. An anti-counterfeiting verification device, comprising one or more processors and one or more memories, wherein the memory stores a program, and the program is executed by the one or more processors to perform the following steps:
receiving a verification code corresponding to a product sent by a user;
performing verification on the product based on the verification code; and
returning permission information to the user if the verification succeeds, so that the user uses at least some of functions of the product by using the permission information.
